# EUROPÄISCHE PATENTSCHRIFT

(11) **EP 3 141 970 B1**
(45) Veröffentlichungstag und Bekanntmachung des Hinweises auf die Patenterteilung: **15.11.2017**
(21) Anmeldenummer: 15184517.9
(22) Anmeldetag: 09.09.2015
(51) Int. Cl.: G05B 19/042

(54) **DEZENTRALE PERIPHERIE**
DECENTRALIZED PERIPHERY
PERIPHERIE DECENTRALISEE

(43) Veröffentlichungstag der Anmeldung: 15.03.2017
(73) Patentinhaber: Siemens Aktiengesellschaft, 80333 München (DE)
(72) Erfinder: Lutz, Benjamin, 76327 Pfinztal (DE); Wolf, Gerrit, 76187 Karlsruhe (DE)

(56) Entgegenhaltungen:
- US-A1- 2015 019 191

## Beschreibung

Die Erfindung betrifft eine dezentrale Peripherie mit Prozesseingabe- und Prozessausgabe-Modulen, welche in einer Prozesssteuerungs-Betriebsart mit an diesen Modulen angeschlossenen Feldgeräten interagieren, und mit einem Interface-Modul, in welchem ein Prozessabbild hinterlegt ist, wobei in der Prozesssteuerungs-Betriebsart die Prozesseingabe-Module Prozesseingangswerte zur Verarbeitung mittels eines mit der dezentralen Peripherie verbundenen Automatisierungsgerätes in das Prozessabbild einschreiben und das Automatisierungsgerät Prozessausgangswerte zur Verarbeitung mittels der Prozessausgabe-Module in das Prozessabbildes einschreibt.

Eine derartige dezentrale Peripherie, welche z. B. unter der Bezeichnung ET 200iSP, ET 200M oder ET 200SP als so genannte Remote I/O-Stationen von der Anmelderin vertrieben werden, ist aus dem Siemens-Katalog ST PCS 7, Ausgabe 2014/2015, Kapitel 11 bekannt. Diese dezentrale Peripherie weist eine Vielzahl von Prozesseingabe- und Prozessausgabe-Baugruppen auf, welche in einer Prozesssteuerungs-Betriebsart mit an diesen Baugruppen angeschlossenen Feldgeräten (Sensoren, Aktuatoren) interagieren. Ferner ist die dezentrale Peripherie mit einer Interface-Baugruppe versehen, welche einerseits über einen Rückwandbus mit den Prozesseingabe- und Prozessausgabe-Baugruppen kommuniziert und andererseits zum Anschluss an einen für hohe Kommunikationsgeschwindigkeiten ausgelegten dezentralen Feldbus, beispielsweise an einen an sich bekannten Feldbus "PROFIBUS DP", vorgesehen ist. Über diesen Feldbus kommuniziert die Interface-Baugruppe mit einem übergeordneten Automatisierungsgerät, das von dieser Interface-Baugruppe Prozesseingangswerte (Istwerte von Sensoren) empfängt, diese Werte gemäß einem Steuerprogramm verarbeitet und schließlich Prozessausgangswerte (Sollwerte) für Aktuatoren erzeugt.

Häufig ist eine Simulation des Verhaltens einer dezentralen Peripherie gewünscht, um damit eine Automatisierungseinrichtung zu Testzwecken simulieren zu können. Dazu ist z. B. eine Simulations-Baugruppe vorgesehen, mittels welcher eine Echtzeit-Simulation einer dezentralen Peripherie bewerkstelligt wird, wobei beispielsweise Signalkurven oder reaktive Signalmodelle auf einer solchen Simulations-Baugruppe implementiert sind. Aufgrund dessen, dass eine Automatisierungseinrichtung bzw. ein Leitsystem eine Vielzahl dezentraler Peripherien aufweist, ist für die genannte Simulation eine Vielzahl von derartigen Simulations-Baugruppen erforderlich. Die Hardwarekonfiguration der Automatisierungseinrichtung muss entsprechend angepasst werden, weil anstelle der dezentralen Peripherien die Simulations-Baugruppen an den Feldbus für die Kommunikation mit dem Automatisierungsgerät angeschlossen werden. Darüber hinaus sind diese Simulations-Baugruppen zum Projektieren, Parametrieren und Konfigurieren dieser Baugruppen kommunikativ mit einem Engineering-System zu verbinden.

US 2015/019191 A1 offenbart Maßnahmen zum Verbinden einer cloud-basierten Simulation mit einer virtuellen Steuerung.

Der Erfindung liegt daher die Aufgabe zugrunde, eine dezentrale Peripherie eingangs genannter Art zu schaffen, welche zu Simulationszwecken geeignet ist. Darüber hinaus ist eine mit mindestens einer dezentralen Peripherie versehene Automatisierungseinrichtung anzugeben, mittels welcher das Verhalten einer Automatisierungseinrichtung vereinfacht simuliert werden kann.

Diese Aufgabe wird im Hinblick auf die dezentrale Peripherie durch die im kennzeichenenden Teil des Anspruchs 1 angegebenen, bezüglich der Automatisierungseinrichtung durch die im Anspruch 3 angegebenen Maßnahmen gelöst.

Vorteilhaft ist, dass in einer bestehenden Komponente der Automatisierungseinrichtung (eine Komponente in Form der dezentralen Peripherie) Simulationsfunktionen implementiert sind. Aufgrund dieser integralen Ausführung eines Gerätesimulationsmodells in der bestehenden Komponente der Automatisierungseinrichtung kann eine Simulation ohne Änderung der Hardwarekonfiguration bewerkstelligt werden. Durch das Automatisierungsgerät oder ein Engineering-System der Automatisierungseinrichtung kann mittels einer definierbaren und herunterladbaren Softwareeinstellung zwischen dem realen Betrieb der dezentralen Peripherie (Feldgeräte-Betrieb) und der Simulation der dezentralen Peripherie nahtlos und vor allem auch stufenlos umgeschaltet werden.

In einer Ausgestaltung der Erfindung weist das Interface-Modul ein Simulations-Script zum Aufrufen von hardware- und/oder softwaremäßig verwirklichten Simulations-Basiskomponenten auf, wobei die Simulations-Basiskomponenten Simulations-Modelle für die Prozesseingabe- und/oder Prozessausgabe-Module repräsentieren. Das Simulations-Script, welches über an sich bekannte Mechanismen in den programmierbaren Baustein ladbar ist, umfasst eine Beschreibung in einer Anweisungsform, die z. B. anzeigt bzw. angibt, welche Simulations-Basiskomponenten in welcher Reihenfolge mit welchen Parametern aufgerufen werden, um eine Gerätesimulation zu verwirklichen. Geeignete Simulations-Basiskomponenten beinhalten beispielsweise Rampenfunktionen, Verzögerungsglieder, Rechenoperationen, Rauschsignale sowie programmierte Abläufe.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Darstellung
- Figur 1: eine dezentrale Peripherie,
- Figur 2: eine Interface-Baugruppe und
- Figuren 3 und 4: Automatisierungseinrichtungen.

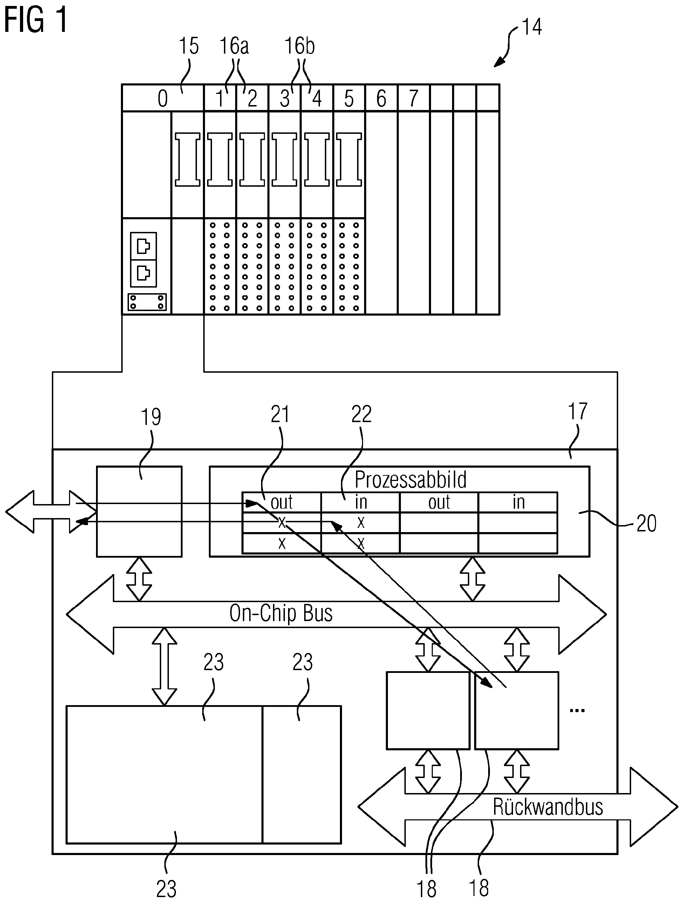

Die in den Figuren 1 bis 4 dargestellten gleichen Teile sind mit gleichen Bezugszeichen versehen.

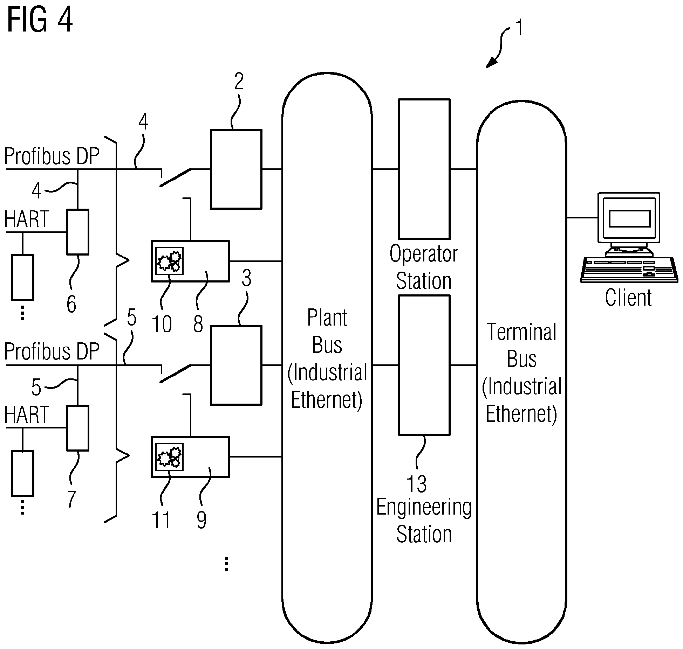

Es wird zunächst auf Figur 4 verwiesen, in welcher Bestandteile einer an sich bekannten Automatisierungseinrichtung 1 dargestellt sind. Die Automatisierungseinrichtung 1 weist Automatisierungsgeräte 2, 3 auf, die jeweils über einen Feldbus 4, 5 mit einer dezentralen Peripherie 6, 7 verbunden sind. Jede dieser dezentralen Peripherien 6, 7 ist mit einer Interface-Baugruppe und mit einer Vielzahl von Prozesseingabe- und Prozessausgabe-Baugruppen versehen, wobei an die jeweiligen Prozesseingabe-Baugruppen Sensoren und an die jeweiligen Prozessausgabe-Baugruppen Aktuatoren angeschlossen sind.

Über den Feldbus 4 kommuniziert die Interface-Baugruppe der dezentralen Peripherie 6 mit dem übergeordneten Automatisierungsgerät 2. Das Automatisierungsgerät 2 empfängt über diese Interface-Baugruppe Prozesseingangswerte von den Sensoren, die an die Prozesseingangs-Baugruppen der dezentralen Peripherie 6 angeschlossen sind. Die Prozesseingangswerte verarbeitet ein auf dem Automatisierungsgerät 2 ablauffähiges Steuerprogramm, das aus diesen Prozesseingangswerten Prozessausgangswerte für die an den Prozessausgabe-Baugruppen der dezentralen Peripherie 6 angeschlossenen Aktuatoren erzeugt. In der entsprechenden Art und Weise kommuniziert die Interface-Baugruppe der dezentralen Peripherie 7 über den Feldbus 5 mit dem Automatisierungsgerät 3. Sowohl die Prozesseingangs- als auch die Prozessausgangswerte werden vor einer Übertragung zunächst in einem Prozessabbild der jeweiligen dezentralen Peripherie 6, 7 hinterlegt, wobei die Übertragung der Prozesseingangswerte von der jeweiligen dezentralen Peripherie 6, 7 zum jeweiligen Automatisierungsgerät 2, 3 und die Übertragung der Prozessausgangswerte vom jeweiligen Automatisierungsgerät 2, 3 zur dezentralen Peripherie 6, 7 mittels eines geeigneten Feldbus-Protokolls erfolgt.

Um ein möglichst reales Verhalten der Anlage bzw. der Automatisierungseinrichtung 1 vor dem eigentlichen Prozesssteuer-Betrieb simulieren zu können, sind Simulations-Baugruppen 8, 9 eingesetzt, welche die realen und unterlagerten dezentralen Peripherien 6, 7 simulieren, um somit die Automatisierungseinrichtung 1 zu Testzwecken stimulieren zu können. In diesen Simulations-Baugruppen 8, 9 sind beispielsweise einfache Signalkurven oder reaktive Signalmodelle implementiert, was in der Zeichnung mittels Bezugszeichen 10, 11 angedeutet ist. Die Integration dieser Baugruppen 8, 9 in die Automatisierungseinrichtung bedeutet eine Änderung der Hardwarekonfiguration der Automatisierungseinrichtung 1 bzw. der Anlage, weil die Baugruppen 8, 9 während eines Simulations-Betriebs an Stelle der dezentralen Peripherien 6, 7 an den jeweiligen Feldbus 5, 6 angeschlossen sind, was in der Zeichnung durch geschweifte Klammern und Schalter veranschaulicht wird. Während dieses Simulations-Betriebs kommunizieren die Simulations-Baugruppen 8, 9 mit den Automatisierungsgeräten 2, 3 über die Feldbusse 4, 5 und über einen Anlagenbus mit einem Engineering-System 13, welches zum Parametrieren und Herunterladen der Simulationskonfiguration in die Simulations-Baugruppen 8, 9 vorgesehen ist.

Um auf Simulations-Baugruppen verzichten und eine - gewöhnlich "nur" für Prozesssteuerungsaufgaben vorgesehene - dezentrale Peripherie auch für Simulationszwecke einsetzen zu können, weist das Interface-Modul dieser dezentralen Peripherie einen programmierbaren Baustein auf. Dieser Baustein ist dazu ausgebildet, in einer Simulations-Betriebsart den Zugriff der Prozesseingabe- und Prozessausgabe-Module auf das Prozessabbild zu blockieren, und ferner, Prozessausgangswerte des Automatisierungsgerätes aus dem Prozessabbild auszulesen, simulierte Prozesseingangswerte zu berechnen und die simulierten Prozesseingangswerte in das Prozessabbild einzuschreiben.

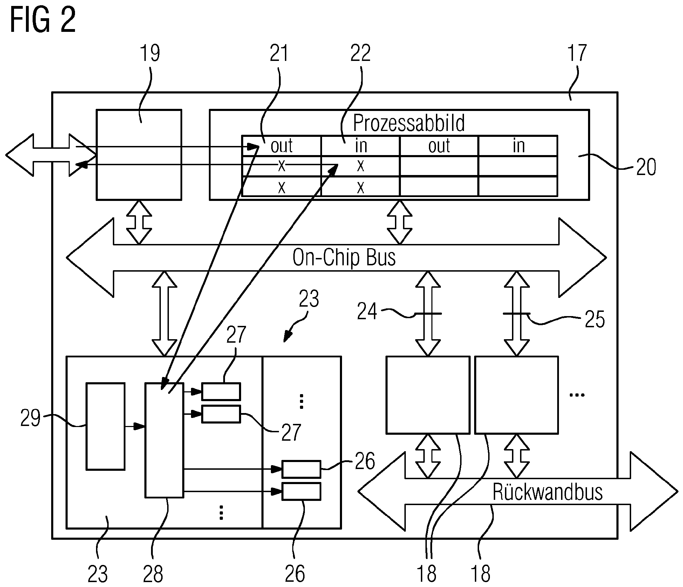

Zur näheren Erläuterung der Funktions- und Wirkungsweise einer derartigen dezentralen Peripherie wird dazu im Folgenden auf die Figuren 1 und 2 verwiesen.

Eine dezentrale Peripherie 14 weist eine Interface-Baugruppe 15 und eine Vielzahl von Signal-Baugruppen (Prozesseingabe-Baugruppen 16a, Prozessausgabe-Baugruppen 16b) auf, die zum Austausch von Informationen über einen Rückwandbus mit der Interface-Baugruppe 15 verbunden sind. Die Interface-Baugruppe 15 ist mit einem programmierbaren Baustein 17 - z. B. ein programmierbarer Baustein in Form eines FPGA-Bausteins (Field Programmable Gate Array) - versehen, welcher mittels einer geeigneten Bus-Schnittstelle 18 mit dem Rückwandbus der dezentralen Peripherie 14 und mit einer weiteren Bus-Schnittstelle 19 mit dem Feldbus 5, 6 (Figur 4) verbunden bzw. gekoppelt ist. Im dem programmierbaren Baustein 17 ist ein Prozessabbild 20 hinterlegt, wobei während einer Prozesssteuerungs-Betriebsart von dem Automatisierungsgerät 2, 3 übermittelte Prozessausgangswerte 21 für die Prozessausgabe-Baugruppen 16b und von den Prozesseingabe-Baugruppen 16a übermittelte Prozesseingangswerte 22 für das Automatisierungsgerät 2, 3 in das Prozessabbild 20 eingeschrieben werden. In der Zeichnung ist der Datenfluss vom und zum Prozessabbild 20 durch entsprechende Pfeile dargestellt.

Um ein möglichst reales Verhalten der dezentralen Peripherie 14 zu simulieren und um die Automatisierungseinrichtung zu Testzwecken stimulieren zu können, wird die dezentrale Peripherie 14 beispielsweise mittels des Automatisierungsgerätes 2, 3 oder mittels des Engineering-Systems 13 in eine Simulations-Betriebsart geschaltet. In dieser Simulations-Betriebsart "deaktiviert" zunächst eine CPU 23 des programmierbaren Bausteins 17 der Interface-Baugruppe 15 die Signal-Baugruppen, die ansonsten - während der Prozesssteuerungs-Betriebsart - Signale bzw. Prozesseingangs- und Prozessausgangswerte über das Prozessabbild 20 austauschen würden. Die Deaktivierung erfolgt in der Art und Weise, indem die CPU 23 die Lese- und Schreibzugriffe der Signal-Baugruppen blockiert, was in der Zeichnung durch Striche 24, 25 an der Busanbindung veranschaulicht ist. Anschließend liest die CPU 23 die im Prozessabbild 20 vom Automatisierungsgerät 2, 3 hinterlegten Prozessausgangswerte 21 (Stellwerte der Aktuatoren), verarbeitet diese Werte 21 nach Maßgabe von Simulations-Basiskomponenten, die Simulations-Modelle der Signalbaugruppen repräsentieren, und schreibt schließlich die berechneten (simulierten) Werte als Prozesseingangswerte 22 direkt in das Prozessabbild 20. Die CPU 23 kann baugruppenspezifische "Bypässe" definieren, wodurch ein flexibler Mischbetrieb möglich ist. Dies bedeutet, es kann entweder ein Simulationsmodell einer Signalbaugruppe der dezentralen Peripherie oder die reale Signalbaugruppe selbst betrieben werden. Somit ist eine flexible und stufenweise Inbetriebnahme der realen Signalbaugruppen möglich, wobei insbesondere auch ein direkter Vergleich durch nahtloses Umschalten zwischen einer realen Signalbaugruppe und einer zu dieser Signalbaugruppe simulierten Signalbaugruppe möglich ist.

Die Simulations-Basiskomponenten sind - je nach Anforderung im Hinblick auf Geschwindigkeit und Echtzeitfähigkeit - als Hardware- oder Software-Komponenten 26, 27 ausgebildet. Die softwaretechnisch verwirklichten Simulations-Basiskomponenten 27, beispielsweise ein Signalgenerator oder eine arithmetische Funktionseinheit (Addierer, Subtrahierer, ...), repräsentieren Software-Funkionen, die in die CPU 23 geladen und von dieser aufgerufen werden können. Die hardwaretechnisch verwirklichten Simulations-Basiskomponenten 26, z. B. in Form eines Rauschgenerators und einer PT1-Strecke, sind als digitale Hardwarekomponenten (IP-Core im Baustein 17) ausgebildet, welche den "Instruktionssatz" der CPU 23 ergänzen und von einem Simulations-Interpreter 28 des Bausteins 17 wie eine Software-Funktion aufgerufen werden können. Dieser Simulations-Interpreter 28 verwirklicht eine Software in der CPU 23 des Bausteins 17, welche ein Simulations-Script 29 liest und ausgelesene Anweisungen entsprechend ausführt. Derartige Anweisungen sind beispielsweise
a) Var a = Read(Prozessabbild, OUT_1);
   Ein Prozessausgangswert (Stellwert) für Aktuator (Motor, Ventil) wird in dezentraler Peripherie in lokale Variable gelesen;
b) IN_1 = call(PT1_Strecke, a);
   Mit dem Stellwert wird durch CPU-Instruktion ein Simulationsmodell PT1_Strecke aufgerufen und ein simulierter Prozesseingangswert (Sensorwert) berechnet,
c) Write(Prozessabbild, IN_1);
   der simulierte Prozesseingangswert wird in das Prozessabbild 20 der dezentralen Peripherie geschrieben und kann vom Automatisierungsgerät 2, 3 gelesen werden.

Das Simulations-Script 29, welches in die CPU 23 geladen wird, beschreibt, welche Simulations-Basiskomponenten, in welcher Reihenfolge diese Komponenten aufgerufen und mit welchen Parametern die Komponenten versorgt werden, um eine Simulation der Signalbaugruppen zu verwirklichen. Die Simulations-Basiskomponenten beinhalten z. B. Rampenfunktionen, Verzögerungsglieder, Rechenoperationen, Rauschsignale oder programmierte Abläufe.

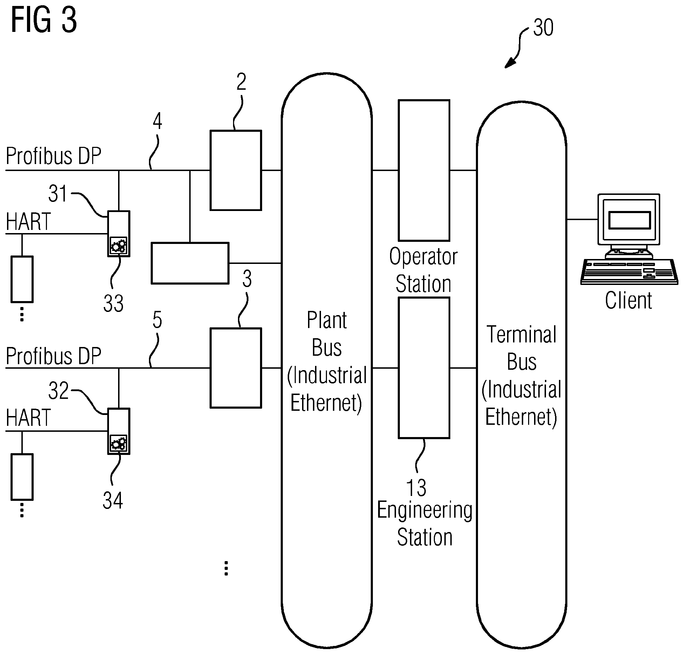

Dadurch, dass in der bestehenden dezentralen Peripherie der Automatisierungseinrichtung Simulationsfunktionen implementiert sind, kann die Simulation der Peripherie ohne zusätzliche Simulations-Baugruppen und ohne Änderung der Hardwarekonfiguration bewerkstelligt werden. In Figur 3 ist eine Automatisierungseinrichtung 30 dargestellt, die zwei dezentrale Peripherien 31, 32 mit integrierter Simulations-Funktionalität aufweist, was in der Zeichnung mit Bezugszeichen 33, 34 angedeutet ist. Durch das Automatisierungsgerät 2, 3 oder das Engineering-System 13 der Automatisierungseinrichtung 30 kann mittels einer definierbaren und herunterladbaren Softwareeinstellung zwischen dem realen Betrieb der dezentralen Peripherie (Feldgeräte-Betrieb) 31, 32 und der Simulation der dezentralen Peripherie 31, 32 umgeschaltet werden.

## Patentansprüche

1. Dezentrale Peripherie mit
- Prozesseingabe- und Prozessausgabe-Modulen (16a, 16b), welche in einer Prozesssteuerungs-Betriebsart mit an diesen Modulen (16a, 16b) angeschlossenen Feldgeräten interagieren, und
- einem Interface-Modul (15), in welchem ein Prozessabbild (20) hinterlegt ist, wobei in der Prozesssteuerungs-Betriebsart die Prozesseingabe-Module (16a) Prozesseingangswerte zur Verarbeitung mittels eines mit der dezentralen Peripherie (14) verbundenen Automatisierungsgerätes (2, 3) in das Prozessabbild (20) einschreiben und das Automatisierungsgerät (2, 3) Prozessausgangswerte zur Verarbeitung mittels der Prozessausgabe-Module (16b) in das Prozessabbild (20) einschreibt,
**dadurch gekennzeichnet, dass** das Interface-Modul (15) einen programmierbaren Baustein (17) aufweist, welcher dazu ausgebildet ist, in einer Simulations-Betriebsart
- den Zugriff der Prozesseingabe- und Prozessausgabe-Module (16a, 16b) auf das Prozessabbild (20) zu blockieren, und
- Prozessausgangswerte des Automatisierungsgerätes (2, 3) aus dem Prozessabbild (20) auszulesen, simulierte Prozesseingangswerte zu berechnen und die simulierten Prozesseingangswerte in das Prozessabbild (20) einzuschreiben.

2. Dezentrale Peripherie nach Anspruch 1, **dadurch gekennzeichnet, dass** das Interface-Modul (15) ein Simulations-Script (23) zum Aufrufen von hardware- und/oder softwaremäßig verwirklichten Simulations-Basiskomponenten (26, 27) aufweist, wobei die Simulations-Basiskomponenten (26, 27) Simulations-Modelle für die Prozesseingabe- und/oder Prozessausgabe-Module (16a, 16b) repräsentieren.

3. Automatisierungseinrichtung mit mindestens einem Automatisierungsgerät und mit mindestens einer dezentralen Peripherie (15, 31, 32) nach Anspruch 1 oder 2.

## Claims

1. Decentralised peripheral with
- process input and process output modules (16a, 16b), which, in a process control mode of operation, interact with field devices connected to these modules (16a, 16b), and
- an interface module (15), in which a process image (20) is stored, wherein in the process control mode of operation the process input models (16a) write process input values for processing by means of an automation device (2, 3) connected to the decentralised peripheral (14) into the process image (20) and the automation device (2, 3) writes process output values for processing by means of the process output modules (16b) into the process image (20),
**characterised in that** the interface module (15) has a programmable element (17) which is embodied, in a simulation mode of operation,
- to block access of the process input and process output modules (16a, 16b) to the process image (20), and
- to read process output values of the automation device (2, 3) out of the process image (20), to calculate simulated process input values and to write the simulated process input values into the process image (20).

2. Decentralised peripheral according to claim 1, **characterised in that** the interface module (15) has a simulation script (23) for calling up simulation basic components (26, 27) realised using hardware and/or software, wherein the simulation basic components (26, 27) represent simulation models for the process input and/or process output modules (16a, 16b).

3. Automation facility having at least one automation device and at least one decentralised peripheral (15, 31, 32) according to claim 1 or 2.

## Revendications

1. Périphérie décentralisée comprenant
- des modules (16a, 16b) d'entrée de processus et de sortie de processus, qui interéagissent dans un type de fonctionnement de commande de processus avec des appareils sur site raccordés à ces modules (16a, 16b) et
- un module (15) d'interface, dans lequel est mémorisée une reproduction (20) de processus, dans laquelle, dans le type de fonctionnement de commande de processus, les modules (16a) d'entrée de processus inscrivent, dans la reproduction (20) de processus, des valeurs d'entrée de processus pour le traitement au moyen d'un appareil (2, 3) d'automatisation relié à la périphérie (14) décentralisée et l'appareil (2, 3) d'automatisation inscrit, dans la reproduction (20) de processus, des valeurs de sortie de processus pour le traitement au moyen des modules (16b) de sortie de processus,
**caractérisée en ce que** le module (15) d'interface a un bloc (17) programmable constitué pour, dans un type de fonctionnement de simulation,
- bloquer l'accès des modules (16a, 16b) d'entrée de processus et de sortie de processus à la reproduction (20) de processus et
- déchiffrer des valeurs de sortie de processus de l'appareil (2, 3) d'automatisation dans la reproduction (20) de processus, calculer des valeurs simulées d'entrée de processus et inscrire les valeurs simulées d'entrée de processus dans la reproduction (20) de processus.

2. Périphérie décentralisée suivant la revendication 1, **caractérisé en ce que** le module (15) d'interface a un script (23) de simulation pour appeler des composants (26, 27) de base de simulation réalisés par matériel et/ou par logiciel, les composants (26, 27) de base de simulation représentant des modèles de simulation pour les modules (16a, 16b) d'entrée de processus et/ou de sortie de processus.

3. Dispositif d'automatisation comprenant au moins un appareil d'automatisation et au moins une périphérie (15, 31, 32) décentralisée suivant la revendication 1 ou 2.
